# EUROPEAN PATENT APPLICATION

(11) **EP 1 533 670 A1**
(43) Date of publication of application: **25.05.2005**
(21) Application number: 04027547.1
(22) Date of filing: 19.11.2004
(51) Int. Cl.: G05B 19/042, G05B 19/05

(54) **Programmable controller and communication interface therefor**

(30) Priority: 20.11.2003 JP 2003391445; 12.11.2004 JP 2004329487
(71) Applicant: Omron Corporation, Kyoto-shi, Kyoto 600-8530 (JP)
(72) Inventor: Sawa, Kazuya, c/o Omron Corporation, Shiokoji-dori Shimogyo-ku Kyoto 600-8530 (JP); Murayama, Shinji, c/o Omron Corporation, Shiokoji-dori Shimogyo-ku Kyoto 600-8530 (JP)
(74) Representative: Kilian, Helmut, Dr.

(57) **Abstract**

A communication interface (15), as a part of a programmable controller (10), serves to carry out command-response communications with an external general-purpose device (20) connected through a specified communication line (24) according to an execution command from a user program for controlling a control device connected to the programmable controller or according to a preliminarily stored program. When a communication command addressed to an external general-purpose device is received from a peripheral device (21), it is converted appropriately for communication through a serial line (24). When it is relayed to the external general-purpose device, it is judged whether it is in a wait condition for a response and the relaying is temporarily stopped. When the wait condition ends, communication is carried out with the external general-purpose and the converted command is relayed to the external general-purpose device.

## Description

### Background of the Invention

This invention relates to a programmable controller and a communication interface therefor, as well as a network system including such a programmable controller.

Programmable controllers (PLCs) used in factory automation are adapted to input ON/OFF data from input devices such as switches and sensors and to carry out logical calculations according to a sequence program (user program) written in the ladder language or the like, carrying out a control by outputting signals on the ON/OFF data to output devices such as valves and actuators. A PLC system, on the other hand, is formed by combining units of different kinds such as a CPU unit which carries out the user program, an I/O unit for handling ON/OFF signals, being connected to input/output devices, a communication unit for carrying out network communication, being connected to external personal computers and external controllers and special function units controlling analog signals, temperatures and positioning operations. Such units are connected together by means of an internal bus such that data are exchanged between the CPU unit at the center and the individual units through bus communications.

The CPU unit is adapted to carry out an initialization process and thereafter cyclically repeat the processes such as the I/O refresh which is to exchange input/output data (I/O data) among the I/O unit and the special function units, the program execution process which is to carry out logical calculations on input data according to a user program and the peripheral processes which are to exchange data with external devices through a network mainly by using the communication unit or to carry out a message-requesting process from the external devices.

There are input and output devices of both a type to be directly connected to the PLC and a type to be connected to it through a network. Among the types that are to be connected directly, there are those to be connected to a specified unit forming the PLC through a general-purpose serial line. In this case, such an input device or an output device becomes an external general-purpose device corresponding to the communications through the general-purpose serial line. For carrying out a communication with such an external general-purpose device connected through a general-purpose serial line by a user program executed by a PLC (or its CPU unit), the PLC may be structured, as disclosed in Japanese Patent Publication Tokkai 9-44212, with a communication interface (a dedicated unit or a dedicated board) preliminarily storing communication routines with external general-purpose devices and provided with an operation mode (a protocol macro executing mode) for carrying out communications with external general-purpose devices by a simple execution indicating command from the user program. If such an invention is used, the creator of user programs is not required to create a user program for carrying out communications with external general-purpose devices under any specified communication protocol and hence the work by the creator of user programs becomes much easier.

On the other hand, there may be computers and programmable display devices as examples of devices connected to a PLC and serving to set data for specified units comprising the PLC or to monitor data stored in such units. When it becomes necessary to monitor the condition of an external general-purpose device or to set specified data on an external general-purpose device from such a computer or a programmable display device, conventional systems read and write data through the PLC since such peripheral devices cannot directly access the external general-purpose devices. In other words, the conditions and data possessed by external general-purpose devices are preliminarily stored on a specified memory area of the I/O memory of the PLC (or its CPU unit) such that the peripheral devices can obtain the conditions, etc. of the external general-purpose devices by reading in the data stored at such a memory area. It is also possible to set parameters on the external general-purpose devices by a communication between the PLC and the external general-purpose device if such parameters set by the peripheral device are written at the specified memory area of the I/O memory.

As explained above, conventional systems could not allow peripheral devices to directly access external general-purpose devices but a direct access to external general-purpose devices becomes substantially possible without going through the user program of the PLC by providing, for example, a function (the gateway function) of relaying and converting a command issued from a peripheral device by the PLC such that a command to an external general-purpose device is outputted.

Explained more in detail, the peripheral device converts the addressee of the header part to the PLC and issues to the data part the address specifying the external general-purpose device which is the actual addressee and a command storing the actual data. As the PLC receives this command, it analyzes the data part to ascertain that the command is addressed to an external general-purpose device connected to itself and hence relays it by converting it to create and issue a new command addressed to the external general-purpose device.

As this new command is received, the external general-purpose device carries out the specified processes based thereon and thereafter returns a response to the PLC which issued the command, while the external general-purpose device itself cannot recognize that the command was actually from a peripheral device. The PLC, as this response is received, transmits it to the peripheral device which originally issued the command since it "knows" which peripheral device has issued the command to which the response corresponds. Thus, the peripheral device recognizes that a command-response communication has been accomplished with the external general-purpose device.

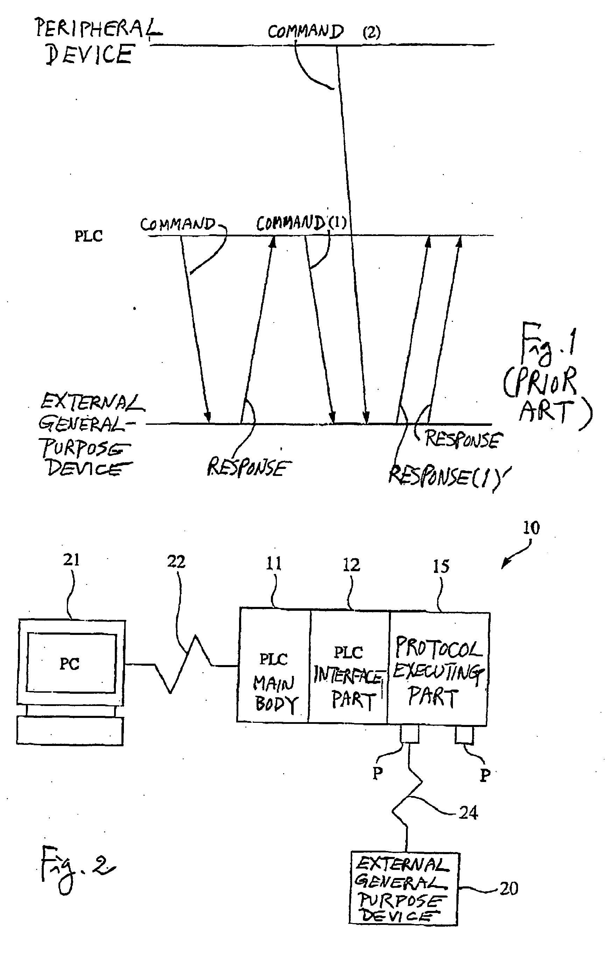

On the other hand, command-response communications through the aforementioned communication interface are carried out also between the PLC and the external general-purpose devices, and the PLC is programmed so as to recognize a received response as a response to the command issued immediately before receiving the response. Thus, after the PLC issues a first command (1) as shown in Fig. 1, if it relays and converts a second command (2) from a peripheral device before a response (1') to the first command (1) is received, this response (1') will be erroneously recognized as the response to the second command (2) which was issued immediately before. It now goes without saying that this can be a cause of an wrongful operation.

In order to avoid such mixing of commands and responses, it is necessary to arrange such that no relay-conversion should be carried out during the protocol macro execution. In other words, the PLC is structured so as not to carry out the relay-conversion while it is communicating with an external general-purpose device in protocol macro execution mode such that commands issued from a peripheral device such as the computers and programmable display devices connected to the PLC to external general-purpose devices and their responses will not be mixed together. This, however, generates the problem that set data and history data of external general-purpose devices cannot be read out by such computers and programmable display devices during the protocol macro execution.

### Summary of the Invention

It is therefore an object of this invention to provide a programmable controller (PLC) with gateway function of access from peripheral devices through a communication interface to external general-purpose devices such that command-response communication between the PLC and the external general-purpose devices need not be stopped during the protocol macro execution.

It is another object of this invention to provide a communication interface for such a programmable controller and a network system including such a programmable controller.

A communication interface of this invention is a part of a programmable controller, serving to carry out command-response communications with an external general-purpose device connected through a specified communication line according to an execution command from a user program for controlling a control device connected to the programmable controller or according to a preliminarily stored program. It may be characterized as comprising relaying means, processing means and control means. The relaying means is for converting a command addressed to the external general-purpose device and received from a peripheral device through the programmable controller so as to become suitable for communication through the specified communication line, converting a response from the external general-purpose device corresponding to the received command into a response to the peripheral device and relaying the converted response to the programmable controller. The processing means is for transmitting the received command to the external general-purpose device and receiving the response from the external general-purpose device corresponding to the transmitted command. The control means is for judging whether or not the processing means is in a wait condition for the response when the command addressed to the external general-purpose device is received, causing the converted command to be transmitted to the external general-purpose device through the processing means if the processing means is judged not to be in the wait condition, not transmitting the converted command if the processing means is judged to be in the wait condition, and making communications with the external general-purpose device through the processing means when the wait condition ends.

In the above, the preliminarily stored program is a program different from the user program (sequence program) for controlling a controller device connected to the programmable controller and may be a program created by the user for carrying out communications with external general-purpose devices and may be stored by a specified memory of the communication interface. All of the means in the above may be realized by an MPU, and the communication interface may be in the form of an inner board detachably mounted to one of the units of the programmable controller. Examples of the external general-purpose device include input and output devices. Examples of the peripheral device includes computers and programmable display devices that may be connected to the programmable controller, serving to access these external general-purpose devices, say, to set and collect data through the connected programmable controller. Examples of the specified communication line may include RS-232C, RS-422 and RS-485.

According to this invention, data communications by command-response communication can be carried out between a programmable controller (or its communication interface) and external general-purpose devices. Since the communication interface of this invention is provided with relaying means with a gateway function, communication protocol can be appropriately converted when a communication command addressed to an external general-purpose device is received by the communication interface from a peripheral device, commands to external general-purpose devices from peripheral devices can be transmitted and responses from external general-purpose devices can be returned to the peripheral devices.

When a communication command addressed to an external general-purpose device is received from a peripheral device, if a command has already been transmitted between the communication interface and the external general-purpose device and it is in the wait condition, for example, the transmission of the aforementioned received communication command is temporarily stopped. After the wait condition ends and when it is no longer in the wait condition, the communication command from the peripheral device is transmitted to the external general-purpose device through the relaying means and a response thereto is received.

As a result, when a response is received by the communication interface, it is guaranteed that this response corresponds to the command that was transmitted immediately before. Since the communication interface (or the programmable controller) can thus recognize the origin of the command corresponding to the response (that is, whether it is itself or a peripheral device), a response can be returned to the origin of the command without committing an error. In other words, the gateway function for a direct access from a peripheral device can be used even during a communication between the communication interface and an external general-purpose device, say, by a protocol macro.

The invention also related to a network system which may be characterized as comprising a programmable controller having mounted thereto a communication interface as described above, a peripheral device connected to the programmable controller, and an external general-purpose general purpose device connected to the communication device.

A programmable controller according to this invention may be characterized as comprising program executing means for executing a user program for controlling a control device and a communication interface as described above.

### Brief Description of the Drawings

Fig. 1 is a time chart for showing a prior art problem involving commands and responses.
Fig. 2 is a block diagram of an example of network system to which the present invention may be applied.
Fig. 3 is a functional block diagram showing the inner structure of the protocol executing part.
Fig. 4 is a time chart for showing the principles of operations of a network system and a communication interface (or the protocol executing part) embodying this invention.
Fig. 5 is a flowchart for explaining the function of a peripheral device.
Fig. 6 is a flowchart for explaining the function of the PLC.
Fig. 7 is a flowchart for explaining the function of the protocol executing part.
Fig. 8 is a flowchart for explaining the function of an external general-purpose device.

### Detailed Description of the Invention

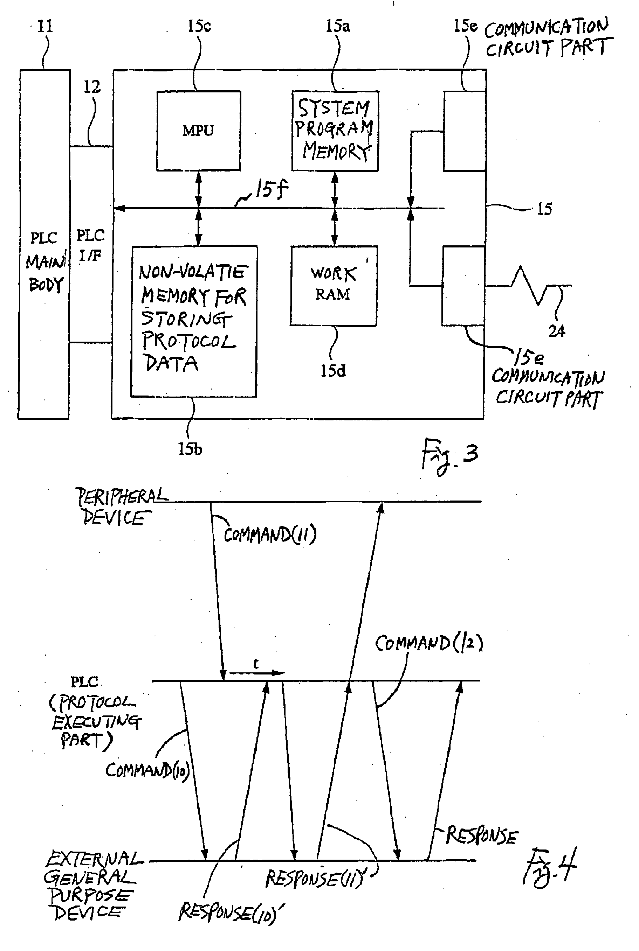

Fig. 2 shows an example of network system to which the present invention may be applied, having an external general-purpose device 20 connected to a PLC 10 and a computer 21 which serves as one of peripheral devices for directly accessing this external general-purpose device 20 and is also connected to the PLC 10. The PLC 10 is of a structure with a plurality of units connected together, inclusive of a protocol executing part 15 serving as a communication interface and connected to a PLC main body 11 through a PLC interface part 12.

Although not shown in detail, the PLC main body 11 comprises a CPU unit for cyclically executing a user program, an electrical power source unit, a communication unit and other units of various kinds. The computer 21 which functions as a monitoring tool, a setting tool or the like is connected to this PLC main body 11 through a specified line 22, which may be an Inthernet (tradename) or other types of network line or a dedicated cable line or general-purpose serial line for directly connecting to a communication port of the PLC main body 11 (or the CPU unit).

The external general-purpose device 20 may be an output device such as an inverter, a servo device or a temperature adjuster or an input device such as a sensor or a switch, connected to a communication port P of the protocol executing part 15 through a general-purpose serial line 24. In the illustrated example, the protocol executing part 15 is provided with two communication ports P.

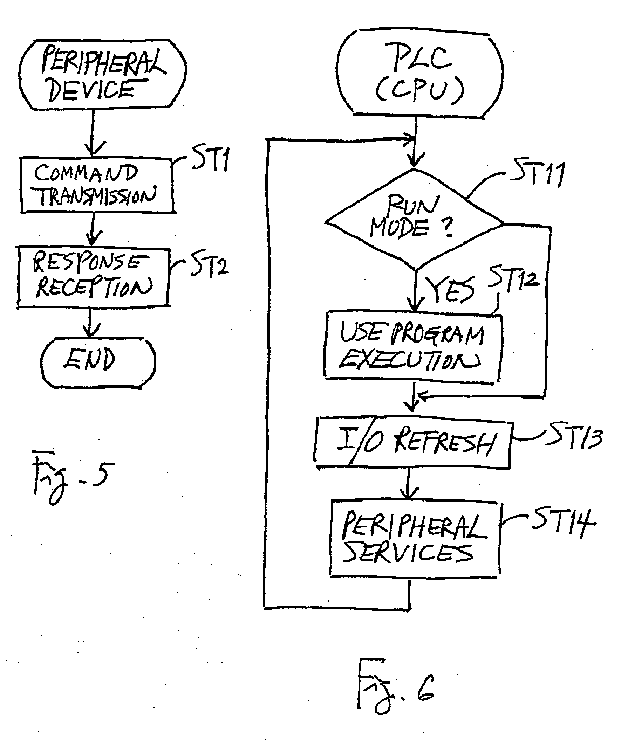

The protocol executing part 15 is sketched in Fig. 2 as if it is an independent one of units but it is not limited to be such a unit. It may take the form of an inner board adapted to be detachably mounted to the CPU unit or another unit. The inner structure of this protocol executing part 15 is as shown in Fig. 3.

As shown in Fig. 3, the protocol executing part 15 is provided with a system program memory 15a that stores a system program for carrying out basic operations of the protocol executing part 15, a non-volatile memory 15b for storing protocol data that stores programs (protocol macros) created by the user for making communications with the external general-purpose device 20, an MPU 15c for carrying out these program these programs stored in these memories 15a and 15b for their execution, a work RAM 15d to be used as a work memory during the executions by this MPU 15c and communication interfaces 15e for making communications with external general-purpose devices. The communication ports P are each provided on the external side of a corresponding one of these communication interfaces 15e. These processing parts 15a-15e are all connected through a bus 15f.

The aforementioned protocol macros stored by the non-volatile memory 15b are programmed by the user and downloaded by means of a tool or the like. They are themselves like those of the prior art type, serving to carry out command-response communications with the external general-purpose devices (such as shown at 20).

The protocol executing part 15 is provided with the gateway function, or the relaying-converting function, whereby, when a command addressed to an external general-purpose device 20 is received from the computer 21 (one of peripheral devices), the protocol executing part 15 converts it into a protocol of the general-purpose serial line with the address changed to the external general-purpose device 20 and transmits the command, and when a response corresponding to this command is received from the external general-purpose device 20, it serves to return it to the computer 21. The program for such a gateway function is stored in the system program memory 15a and is executed by the MPU 15c.

According to the current example being described, the protocol executing part 15 firstly analyzes the protocol macro to be executed with the external general-purpose device 20 as a command addressed to the external general-purpose device 20 is received from the computer 21 and stops the execution of the protocol macro momentarily if the next step is other than reception, carrying out the process of transmitting to the external general-purpose device 20 the command from the computer 21 to the external general-purpose device 20.

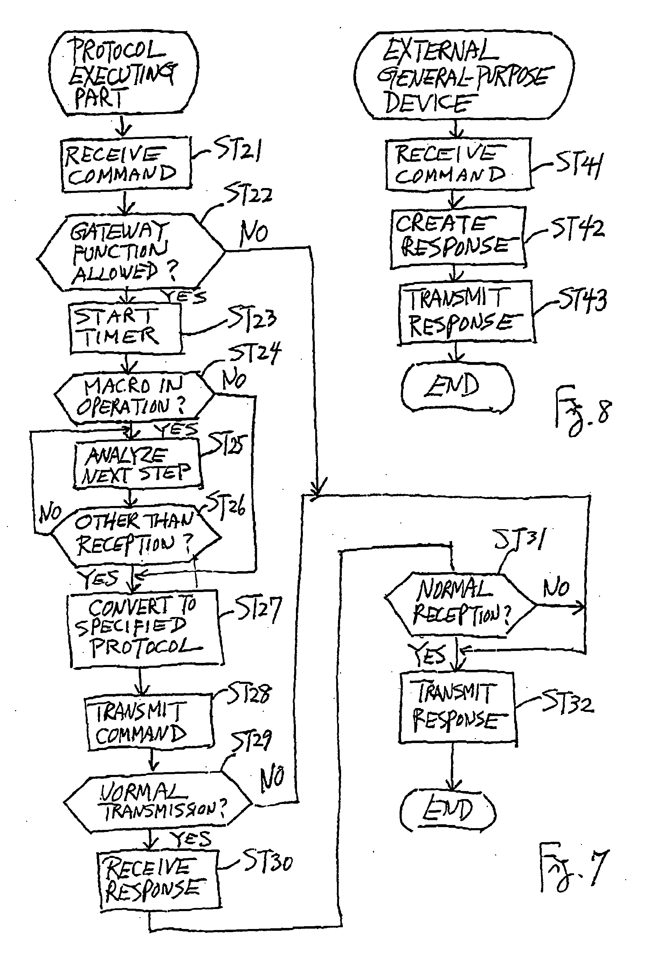

This will be explained next more in detail with reference to Fig. 4 which shows a situation wherein the PLC 10 (or its protocol executing part 15) receives a command (11) to the external general-purpose device 20 from the computer 21 (a peripheral device) after it issues a command (10) to the external general-purpose device 20 but before its response (10)' is received, as a protocol macro is being executed. In this case, since the next step by the protocol executing part 15 is to wait for the receipt of the response (10)' to the earlier transmitted command (10), the macro continues to be executed and the relay (and transmission) of the command from peripheral devices is temporarily stopped for a period of t. When the response (10)' is received, the next step is the transmission of the command (12), and since the transmission of the command (12) is other than reception, this macro is temporarily stopped and the command (11) from the computer 21 is transmitted to the external general-purpose device 20. When a response (11)' to this command (11) is received, it is returned to the computer 21 (a peripheral device) after a suitable conversion process is carried out. This also has the effect of temporarily releasing the temporarily stopped macro and another command (12) may be transmitted according to the protocol macro.

With a system thus structured, a response is always one that corresponds to the command which was transmitted immediately before such that the gateway function through which a peripheral device such as the computer 21 may be directly accessible to an external general-purpose device can be used even during the operation of a protocol macro. Thus, since necessary data for control can be collected by a protocol macro and messages can be exchanged between external general- purpose devices and peripheral devices such as host personal computers and display devices under the conditions of an event such as at the time of a maintenance or a startup, there is no need to collect data such as the setting and history of external general-purpose devices by way of a protocol macro.

Detailed operational functions of each device for carrying out the processes described above will be explained next with reference to Figs. 5-8.

Peripheral devices such as the computer 21 are adapted to transmit a command (Step ST1) and to receive a response (Step ST2) corresponding thereto, as shown in Fig. 5. The command which is transmitted in Step ST1 may be addressed to the PLC 10 or to the external general-purpose device 20. Since the present invention relates to commands addressed to external general-purpose devices, only commands addressed to such a device will be considered in what follows.

As shown in Fig. 6, the PLC main body 11 (or the CPU unit) serves to check whether or not it is in the execution mode (or the RUN mode) (Step ST11) and executes the user program (Step ST12) if the program is in the RUN mode (YES in Step ST11). After executing the user program, or without executing the user program if it is not in the RUN mode, the PLC main body 11 carries out the I/O refresh process (Step ST13) and then the peripheral services (Step ST14). The transmission of a command (Step ST1) and the reception of a response (Step ST2) by the peripheral device 20 are carried out during this process of peripheral services. In other words, the processing of receiving a command transmitted from a peripheral device is carried out during a period of peripheral services and the response to this command is returned during either the same period of peripheral services or another period of peripheral services in a later cycle. If the received command is addressed to an external general-purpose device, data addressed to the external general-purpose device and indicative data indicating the protocol used for this communication are transmitted as a pair through the PLC interface part 12.

When a response transmitted from the protocol executing part 15 is received through the PLC interface part 12 and if the address of this response is a peripheral device, the response is transmitted to the corresponding peripheral device during this process of peripheral services. This response is received in Step ST2 of the peripheral device.

The protocol executing part 15 has the function of executing the flowchart shown in Fig. 7. When a command is firstly received (Step ST21), it is decided whether or not the gateway function (for relaying and conversion) is being allowed (Step ST22). This decision can be made by checking the ON or OFF condition of a flag ("gateway flag") which may be set mechanically, for example, by operating a setting switch provided to the protocol executing part 15 or by a command from a tool or the PLC main body 11. If it is decided that the gateway function is not being allowed (NO in Step ST22), a response to this effect is transmitted (Step ST32) since the command cannot be relayed from the peripheral devices to external general-purpose devices.

A monitoring timer is started (Step ST23), on the other hand, if it is decided that the gateway function is being allowed (YES in Step ST22). This monitoring timer is for determining whether a specified time has passed since a command is transmitted from an external general-purpose device, being started when the corresponding command is transmitted to the external device and serving to determine whether or not a corresponding response is received within the specified time.

It is next determined whether or not the protocol macro function is in operation (Step ST24). If it is in operation (YES in Step ST24), the next step in the operation of the macro execution (which consists of a plurality of steps) and the program waits until the next step becomes other than a reception step (Steps ST25 and ST26). If the next step is for transmission or for clearing the buffer ("buffer clear"), for example, the protocol is changed into the specified one corresponding to the general-purpose serial line connected to the external general-purpose device 20 (Step ST27) and the command is transmitted to the specified external general-purpose device 20 (Step ST28). It is determined thereafter whether or not the transmission has been completed normally (Step ST29) and if it has been completed normally (YES in Step ST29), it waits for the response to be received (Step ST30). A judgment as to whether a response has been received normally may be effected by a sum-check method, and if it is determined that a response has been received normally (YES in Step ST31), a response including the results of the judgments (yes or no) made above is transmitted (Step ST32).

As shown in Fig. 8, as a command from the protocol executing part 15 is received, the external general-purpose device 20 (Step ST41), a response is created (Step ST42) and transmitted (Step ST43). These are the same functions as the prior art.

Although not shown in the flowchart of Fig. 8, an error response is created immediately if the monitoring timer started in Step ST23 counts up the specified time. The created error response is addressed and transmitted to a peripheral device such as a programmable display device. If the protocol executing part received a response from the external general-purpose device after the monitoring timer has counted up the specified time, the received data are discarded.

If a command is transmitted from a peripheral device to an external general-purpose device while the protocol macro is stopped, the protocol executing part automatically recognizes the protocol to be transferred from the received command and immediately converts the command issued from the peripheral device to a specified protocol and transmits it to the external general-purpose device unless a gateway processing is being carried out.

The protocol macro stored in the non-volatile memory 15b may be carried out according to an execution command in a user command for controlling a control device connected to the PLC 10. It may also be arranged such that a specified protocol macro will be executed automatically by an initialization process when power for the PLC is switched on.

## Claims

1. A communication interface as a part of a programmable controller, serving to carry out command-response communications with an external general-purpose device connected through a specified communication line according to an execution command from a user program for controlling a control device connected to said programmable controller, said communication interface comprising:
relaying means for converting a command addressed to said external general-purpose device and received from a peripheral device through said programmable controller so as to become suitable for communication through said specified communication line, converting a response from said external general-purpose device corresponding to said received command into a response to said peripheral device and relaying said converted response to said programmable controller;
processing means for transmitting said received command to said external general-purpose device and receiving said response from said external general-purpose device corresponding to said transmitted command; and
control means for judging whether or not said processing means is in a wait condition for said response when said command addressed to said external general-purpose device is received, causing said converted command to be transmitted to said external general-purpose device through said processing means if said processing means is judged not to be in said wait condition, not transmitting said converted command if said processing means is judged to be in said wait condition, and making communications with said external general-purpose device through said processing means when said wait condition ends.

2. The communication interface of claim 1 which is an inner board mounted to one of units of said programmable controller.

3. A communication interface as a part of a programmable controller, serving to carry out command-response communications with an external general-purpose device connected through a specified communication line according to a preliminarily stored program, said communication interface comprising:
relaying means for converting a command addressed to said external general-purpose device and received from a peripheral device through said programmable controller so as to become suitable for communication through said specified communication line, converting a response from said external general-purpose device corresponding to said received command into a response to said peripheral device and relaying said converted response to said programmable controller;
processing means for transmitting said received command to said external general-purpose device and receiving said response from said external general-purpose device corresponding to said transmitted command; and
control means for judging whether or not said processing means is in a wait condition for said response when said command addressed to said external general-purpose device is received, causing said converted command to be transmitted to said external general-purpose device through said processing means if said processing means is judged not to be in said wait condition, not transmitting said converted command if said processing means is judged to be in said wait condition, and making communications with said external general-purpose device through said processing means when said wait condition ends.

4. A network system comprising:
a programmable controller having a communication interface mounted thereto;
a peripheral device connected to said programmable controller; and
an external general-purpose general purpose device connected to said communication device;
said communication interface judging whether or not said communication interface is in a wait condition for a response from said external general-purpose device when a communication command issued by said peripheral device addressed to said external general-purpose device is being relayed, temporarily stopping the relay in said wait condition and carrying out a communication with said external general-purpose device when said wait condition ends.

5. The network system of claim 4 wherein said communication interface is an inner board mounted to one of units of said programmable controller.

6. A programmable controller comprising:
program executing means for executing a user program for controlling a control device; and
a communication interface serving to carry out command-response communications with an external general-purpose device connected to said programmable controller through a specified communication line according to an execution command from said user program, said communication interface comprising:
relaying means for converting a command addressed to said external general-purpose device and received from a peripheral device through said programmable controller so as to become suitable for communication through said specified communication line, converting a response from said external general-purpose device corresponding to said received command into a response to said peripheral device and relaying said converted response to said programmable controller;
processing means for transmitting said received command to said external general-purpose device and receiving said response from said external general-purpose device corresponding to said transmitted command; and
control means for judging whether or not said processing means is in a wait condition for said response when said command addressed to said external general-purpose device is received, causing said converted command to be transmitted to said external general-purpose device through said processing means if said processing means is judged not to be in said wait condition, not transmitting said converted command if said processing means is judged to be in said wait condition, and making communications with said external general-purpose device through said processing means when said wait condition ends.

7. The programmable controller of claim 6 wherein said communication interface is an inner board mounted to one of units of said programmable controller.
